# EUROPEAN PATENT SPECIFICATION

(11) **EP 1 310 080 B1**
(45) Date of publication and mention of the grant of the patent: **20.06.2007**
(21) Application number: 01955078.9
(22) Date of filing: 26.07.2001
(51) Int. Cl.: H04M 3/42

(54) **UNIVERSAL COMMUNICATIONS DATABASE SYSTEM AND METHOD FOR INTEGRATED SERVICES**
UNIVERSALKOMMUNIKATIONENDATENBANK-SYSTEM UND METHODE FÜR INTEGRIERTE DIENSTLEISTUNGEN
SYSTEME ET PROCEDE DE BASE DE DONNEES DE COMMUNICATION UNIVERSELLE POUR SERVICES INTEGRES

(30) Priority: 27.07.2000 US 627193
(43) Date of publication of application: 14.05.2003
(73) Proprietor: Alcatel USA Sourcing, L.P., Plano, Texas 75075 (US)
(72) Inventor: MANI, Babu, V., Plano, TX 75025 (US); STEVENS, Gilman, R., Fairview, TX 75069 (US)
(74) Representative: Schmidt, Werner Karl
(86) International application number: PCT/US2001/041459
(87) International publication number: WO 2002/011408

(56) References cited:
- US-A1- 2001 055 379

## Description

### BACKGROUND OF THE INVENTION

### Technical Field of the Invention

The present invention relates to telecommunications networks and services and, more particularly, to a system and method for providing a universal communications database for supporting integrated services based on multiple types of communication within a network or a combination of networks.

### Description of Related Art

Coupled with the phenomenal growth in popularity of the Internet, there has been a tremendous interest in integrating packet-switched network (PSN) infrastructures (e.g., those based on Internet Protocol or IP) with the existing circuit-switched network (CSN) infrastructures used in today's telephony. From the network operators' perspective, the inherent traffic aggregation in packet-switched infrastructures allows for a reduction in the cost of transmission and the infrastructure cost per end-user. Ultimately, such cost reductions enable the network operators to pass on the concomitant cost savings to the end-users.

In spite of the unprecedented convergence that has been taking place between the PSN-based data communications and CSN-based telecommunications, several deficiencies still remain in the arena of seamless service provisioning. For example, typically either seven- (NXX-XXXX) or ten- (NPA-NXX-XXXX) digit directory numbers (wherein the XXXX identifies the four-digit customer line number, NXX is the three-digit central office (CO) code, and NPA is the three-digit area code) are used to route calls through the Public Switched Telephony Network (PSTN). With the rise of converged networks, many, and soon most will, have multiple email addresses and several communication device addresses, e.g., cellular phone numbers, pager numbers, facsimile numbers, wireline phone numbers, et cetera. Being able to get in touch with a subscriber, accordingly, typically requires an individual to carry a formidable list of contact numbers and/or addresses. Since each mode or type of communication is based on a different format (because of the different technologies), one cannot use a single contact number or address to communicate with a subscriber for multiple types of communication, thereby frustrating the purpose of having the convenience of multiple services in a putative converged network environment. In addition, although a whole new type of products, e.g., electronic data organizers, have evolved to meet the needs of individuals for collecting and organizing the various lists of contact numbers and addresses, they are not only inconvenient to carry all the time, but also they are simply incapable of effectuating multiple types of communication based on single contact numbers/addresses.

Another example of the deficiencies of the state of the art is in the area of service portability. For instance, at present, the wireline telephone service is tied to a fixed location, namely, a physical port or circuit and a directory telephone number is associated with a particular physical termination. When someone moves to a new residence, he or she needs to contact the local telephone company to establish his/her telephone service. The individual is given a telephone number and all terminating calls to that telephone number are normally directed to the physical termination at that residence. While a "call forwarding" option is available to redirect a terminating call to a different telephone number, the calls are still directed to a new number which is associated with a different physical termination. Even where solutions such as Local Number Portability allow the subscriber to keep the previous telephone number, the subscriber has to go through the process of establishing a new subscription. In addition, the switching network is required to keep track of all ported numbers. It should be appreciated that the current solutions are woefully inadequate with respect to the provisioning of highly desirable conveniences such as the following: continuing to maintain the telephone service options a subscriber has when moving to a different location or switching to a different service provider; temporarily relocating one's telephone service to a different physical termination without changing the telephone number; subscribing to a telephone service without establishing a permanent relationship between one's telephone number and a physical termination; and contacting a subscriber by dialing the subscriber's "name" rather than a "numeric code."

### SUMMARY OF THE INVENTION

Accordingly, the present invention advantageously provides a universal communications database method and system for supporting multiple types of communications based on a single Personal ID (PID) uniquely assigned to a subscriber. The PID is preferably based on the subscriber's name and is associated with one or more communication type identifiers which identify to a network element as to the type of communication being engaged with respect to a particular subscriber. Several communication types are supported: wireline and wireless phone communications, multimedia sessions, Internet communication, email, facsimile transmissions, pager communications, etc. A generic communication event is defined so as to embrace these multiple types of communication. The unique combination of the PID and a communication type identifier is mapped to various treatment data for the communication events specified for the subscriber. Access privileges data and preference options data are also provided in the universal communications database for modifying the execution treatment of communication events, which database is preferably implemented using a hierarchical database architecture.

In one aspect, the present invention is directed to a memory structure for storing a universal communications database usable in effectuating an integrated communications infrastructure. The universal communications database memory structure comprises a profile array including a plurality of PID values, each of which is uniquely associated with a particular subscriber registering with the universal communications database. At least one communication type identifier is associated with each PID value as an extension, suffix, or prefix thereto, wherein the communication type identifier operates to indicate to a network element the type of a communication event engaged with respect to a specific subscriber's PID value. Also included in the database is a structure corresponding to each PID value for storing a plurality of treatment data relating to the PID value based on its communication type identifiers. In operation, when a message signal indicative of a communication event is received in the network element, wherein the signal includes a specific PID value and associated communication type identifier, the signal is translated to provide appropriate treatment data for effectuating the communication event with respect to the specific subscriber to whom the PID value is assigned in the universal communications database.

In another aspect, the present invention is directed to a method of effectuating communication based on a PID uniquely associated with a subscriber. Upon receiving in a network element a message signal indicative of a communication event with respect to the subscriber, wherein the signal includes the PID and a communication type identifier, the signal is analyzed to identify the communication event by examining the communication type identifier. A first database is queried to determine appropriate treatment data for the communication event based on the PID. Thereafter, the communication event is effectuated depending on the treatment data, if such data is available at the first database. Otherwise, a second database is queried by the network element to determine the treatment data for the communication event based on the PID. Upon retrieving the appropriate treatment data for the communication event from the second database, the communication event is effectuated with respect to the subscriber by utilizing the retrieved treatment data.

In yet another aspect, the present invention is directed to a computer-accessible medium operable with a network element, the network element interacting with a universal communications database having PID indicia uniquely assigned to subscribers, wherein the computer-accessible medium carries a sequence of instructions provided for executing service logic with respect to a communication event based on the PID indicia. The service logic, when executed by a processor forming a portion of the network element, causes the processor to perform the following steps. Upon receiving in the network element a message signal indicative of the communication event with respect to a particular subscriber, wherein the signal includes a specific PID indicium assigned to the subscriber and a communication type identifier, the signal is analyzed to identify the communication event by examining the communication type identifier. Thereafter, the universal communications database is queried by the network element to determine appropriate treatment data for the communication event based on the PID indicium. Subsequently, the communication event is effectuated for the subscriber based on the treatment retrieved from the universal communications database.

In yet further aspect, the present invention is related to a database record management method for use with a network element in effectuating multiple types of communication based on PID indicia uniquely assigned to subscribers. A communication type identifier is coupled (as an extension, for example) to a particular PID indicium assigned to a specific subscriber for identifying a communication event. In accordance with the database record management method, when a PID indicium that is unknown to a local database associated with the network element is received thereat for effectuating a communication event, the network element queries a remote database for a profile record associated with the specific subscriber, wherein the profile record includes the specific subscriber's PID indicium and treatment data relating to the specific subscriber's PID. Upon processing the particular communication event, the network element updates its local database by adding the profile record for the specific subscriber. Also, the network element requests the remote database to inform the local database when any changes in the the specific subscriber's profile record are effectuated at the remote database. Depending upon a configurable time period for monitoring activity, the profile record associated with the specific subscriber's PID is deleted from the local database if the profile record is not used by the network element in a predetermined time period.

In a still further aspect, the present invention is directed to a call porting method for providing universal mobility to subscribers in a communications network having a database for storing PID data uniquely assigned to subscribers. A plurality of profile records are provided in the database wherein each profile record includes an association between the PID data assigned to a particular subscriber and a current telephony port ID or address used by that subscriber. Upon subscribing to a telephony service provided by a first service provider, a user registers at the database as a subscriber, using a first telephony port with a first telephony port address that is served by a first network element operated by the first service provider. A dial tone is available to the subscriber at the first telephony port for effectuating registration with the database, whereupon the first telephony port address is associated with the user/subscriber's unique PID. When a message signal is received in the first network element, which signal is indicative of a phone call with respect to the user and includes the user's unique PID, a determination is made if the phone call can be effectuated by ascertaining whether the user's PID is currently associated with the first telephony port address. If so, the phone call is then effectuated using the first telephony port address. Otherwise, the first network element queries the database to determine if the user has registered the user's PID from a second telephony port address. If it is determined that the user has registered the user's PID from a second telephony port address, the phone call is effectuated using the second telephony port address for the user.

### BRIEF DESCRIPTION OF THE DRAWINGS

A more complete understanding of the present invention may be had by reference to the following Detailed Description when taken in conjunction with the accompanying drawings wherein:
FIG. 1 depicts an exemplary embodiment of the present invention wherein a universal communications database is advantageously provided for facilitating integrated services based on unique PIDs assigned to registered subscribers;
FIG. 2 depicts an exemplary hierarchical arrangement of a universal communications database of the present invention;
FIGS. 3 and 4A-4B depict database portions comprising an exemplary universal communications database of the present invention wherein communication events are defined based on extensible markers associated with subscribers' unique PIDs and various attributes relating thereto;
FIG. 5 is a flow chart depicting the steps involved in an exemplary method of effectuating a communication event in accordance with the teachings of the present invention;
FIGS. 6A and 6B depict a flow chart which includes the steps involved in an exemplary database record management method for use with a hierarchical universal communication database of the present invention;
FIG. 7 depicts an exemplary communications network system provided in accordance with the teachings of the present invention wherein universal mobility is accomplished for a subscriber when the subscriber moves to a different serving area or switches service providers; and
FIGS. 8A and 8B depict a flow chart which illustrates the steps involved in an exemplary call porting method for accomplishing universal mobility in accordance with the teachings of the present invention.

### DETAILED DESCRIPTION OF THE DRAWINGS

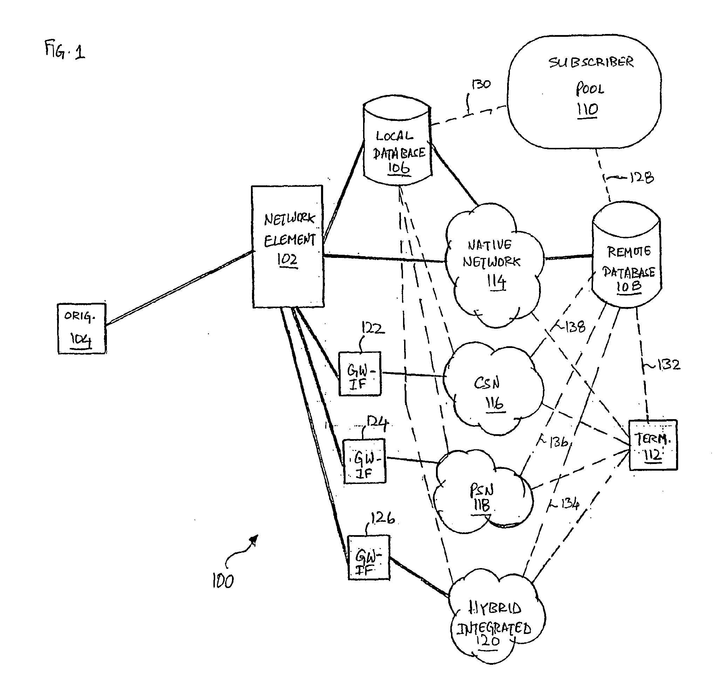

In the drawings, like or similar elements are designated with identical reference numerals throughout the several views thereof, and the various elements depicted are not necessarily drawn to scale. Referring now to FIG. 1, depicted therein is an exemplary embodiment an internetworking network arrangement 100 wherein a universal communications database, preferably hierarchically organized into a local database 106 and a remote database 108, is advantageously provided for facilitating integrated services in accordance with the teachings of the present invention. A profile array (not shown in this FIG.) is included in the databases wherein a single unique Personal ID (PID) is assigned to each of the subscribers in subscriber pool 110. The local database 106 is operably coupled to a network element (e.g., an exchange, switching point, etc.) 102 which is provided as a node in a network 114 wherein the databases and network elements can interact with each other without protocol conversions, media gateway/interfaces, and the like. Accordingly, the network portion 114 may be considered as the "native" network for the network element 102 and the databases 106, 108. Those skilled in the art should readily recognize that the network 114 may be operable as a circuit-switched network (CSN), a packet-switched network (PSN), or a combination thereof.

Further, the network element 102 is preferably operable with one or more media gateways/interfaces (GW-IF) for effectuating multiple types of communication in accordance with the teachings of the present invention. By way of example, a GW-IF 122 is provided for interoperability with a CSN network 116 for carrying out circuit-switched services. In similar fashion, GW-IF 124 and GW-IF 126 are exemplified for effectuating interoperable internetworking functionality between the network element 102 and a PSN-based network infrastructure 118 and a hybrid/integrated network infrastructure 120, respectively.

The remote database 108 of the present invention is preferably interoperable with the networks 116, 118 and 120 by way of appropriate protocols/interfaces for effectuating multiple integrated communications/services for a subscriber. Database interfacing paths 13 8, 136, and 134 are illustrative with respect to the CSN network 116, PSN network 118, and the hybrid/integrated network 120, respectively. Further, these networks are also interoperable with the local database 106 associated with the network element 102.

Preferably, the profile array information comprising the unique PID data for the subscribers (i.e., users registered at the remote database 108) is provided to be configurable by the subscribers, network operators, and the service providers such as wireline and wireless phone service providers, paging service providers, mobile Internet access providers, email service providers, Internet Service Providers (ISPs), Internet Access Providers (IAPs), Application Service Providers (ASPs), etc. Preferably, the various network operators and service providers have service agreements with the universal communications database operator such that, for example, when a registered subscriber of the database also becomes a subscriber of a particular service provider, the service provider can interact directly or indirectly with the database to reconfigure the profile record associated with the registered subscriber. In addition, the registered subscriber may also cause a suitable modification to the profile record associated with the subscriber's unique PID indicium upon subscribing to a service from a service provider so as to effect a correspondence between the PID indicium and the particular service's treatment data which is to be used for effectuating a communication event pertaining to that service. As depicted in FIG. 1, reference numerals 128, 130 and 132 exemplify a plurality of interactive paths available to the subscribers for interacting with the databases 106 and 108. For instance, such paths may preferably be implemented using Web-based mechanisms.

As will be set forth hereinbelow in greater detail, the PID indicia are associated with "standardized" communication type identifiers each of which identifies to a network element such as, e.g., network element 102 of the network arrangement 100, as to the type of a communication event. That is, for each type of communication, a specific identifier is implemented to indicate to the network elements the type of communication being engaged when a signal or message relating to a communication event is received thereat. Several such identifiers are contemplated within the scope of the present invention: wireless telephony communication identifier, wireline telephony communication identifier, facsimile transmission communication identifier, email communication identifier, IP-based communication identifier, pager communication identifier, multimedia communication identifier, etc.

In exemplary general operation, when a communication event message or signal originated by an originating party 104 is received at the network element 102, which communication event is intended for a subscriber 112 (i.e., terminating party) registered with the universal communications database, a query is launched to the local database 106 to determine the treatment data for the received PID based on the communication type identifier included in the message. The communication event is effectuated thereafter with respect to the terminating party 112 associated with the received PID. The remote database 108 will be queried if the local database 106 is unable to provide the treatment data.

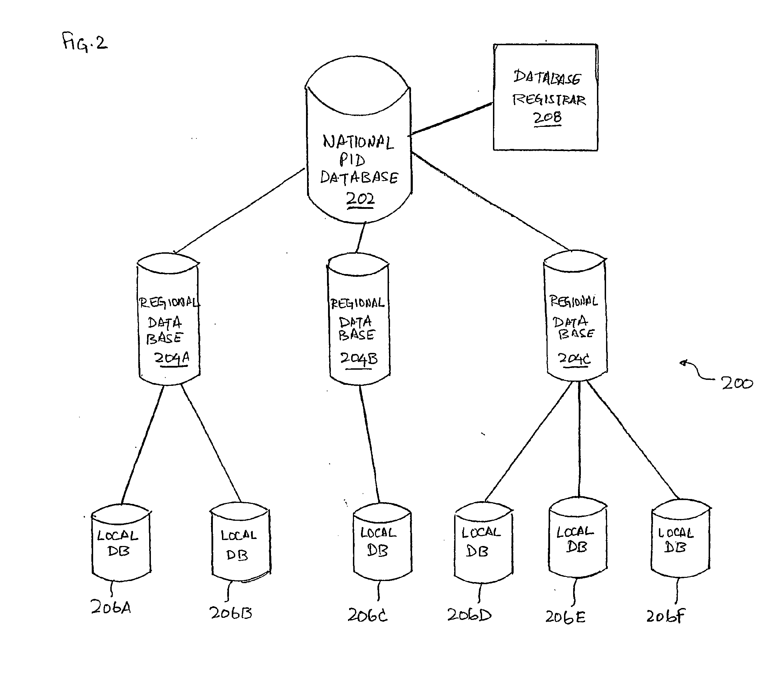

Referring now to FIG. 2, depicted therein is an exemplary hierarchical database arrangement of a universal communications database 200 provided in accordance with the teachings of the present invention. A national PID database or registry 202 is preferably operable by a database registrar 208 for providing centralized database storage, maintenance, record-keeping, and registration. The database registrar 208 may employ any known or hitherto unknown mechanism for assigning PIDs to potential subscribers. By way of example, a fairness-based algorithm such as first-come-first-served may be implemented. Also, the database registrar 208 is preferably operable to resolve potential conflicts that may arise when two subscribers with identical personal indicia may attempt to register substantially at the same time.

A plurality of regional-level databases, e.g., databases 204A - 204C, are provided as intermediary databases to which queries may be launched by network elements when PID-based communication event messages received thereat are not resolved by the use of local databases such as, e.g., databases 206A through 206F. Also, a network element may directly query the national PID database 202 when its local database does not have the necessary information to effectuate a communication event with respect to a particular PID. Accordingly, a remote database such as the remote database 108 shown and described in reference to FIG. 1 hereinabove may comprise a regional-level database or the national PID database 202.

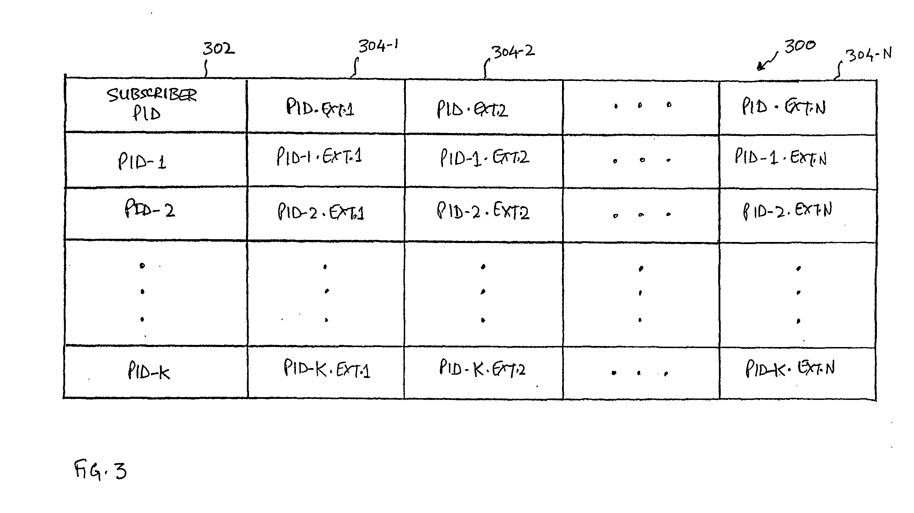

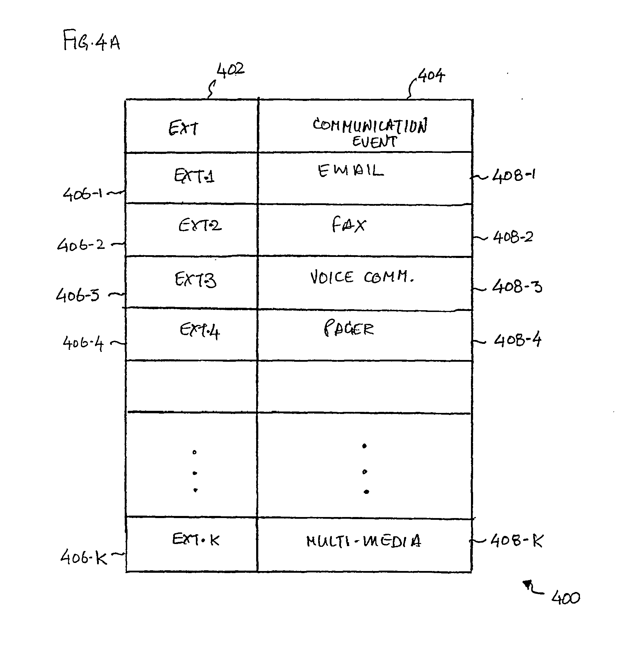

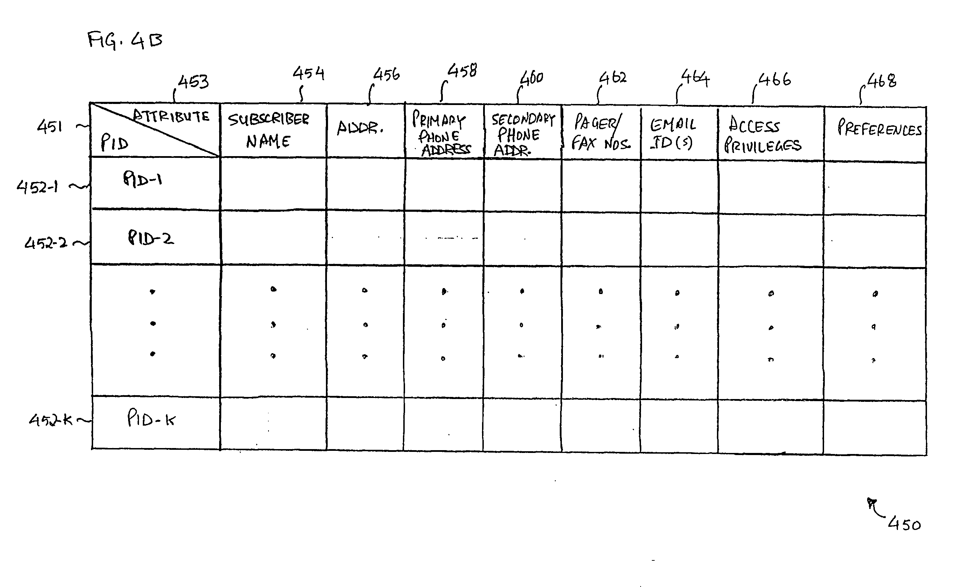

FIGS. 3 and 4A-4B depict the various aspects of the universal communications database of the present invention for effectuating multiple types of communication based on single unique PIDs assigned to the registered subscribers. As described in the foregoing, each type of communication is identified by a standardized communication type identifier, which is preferably provided as an extensible marker or extension to the PIDs. A PID-extension array 300 forming a database portion of the universal communications database is exemplified in FIG. 3, wherein each subscriber PID 302 is provided with one or more extensions to identify the various types of communication events that may be effectuated for a particular subscriber using a single unique PID. For example, EXT.13 04-1 through EXT.N 3 04-N are illustrated for PID-1 through PID-K indicia, each extension set for a particular PID indicium forming at least a portion of a PID profile record associated therewith. Those skilled in the art should readily recognize that although each subscriber PID is depicted with the same number of extensions (i.e., N extensions) in the database portion 300, it is not necessary that each PID be associated with the same number of communication type identifiers to practice the present invention. Accordingly, the PID profile records of the database portion 300 may have different dimensions in some exemplary embodiments.

Further, the communication type identifiers contemplated herein may not be solely limited to extensible markers appended to the PID indicia. Instead, they may be provided as prefixes or suffixes, or some other portion coupled to the PID indicia depending upon the requirements of a particular implementation.

FIG. 4A depicts a database portion 400 exemplifying another aspect of the universal communications database of the present invention, wherein a communication type identifier column 402 comprising standardized extension markers is mapped to a communication event column 404 which specifies the various types of communication supported by the universal communications database. Congruent with the discussion set forth hereinabove, a plurality of extension identifiers, reference numerals 406-1 to 406-K, are illustrated. Each identifier identifies a particular communication mode: email 408-1, fax transmission 408-2, voice communication 408-3 (which may be further differentiated into wireless and wireline events), pager communication 408-4, IP-based multimedia communication 408-K, et cetera.

FIG. 4B depicts a database portion 450 exemplifying another aspect of the universal communications database provided in accordance with the teachings of the present invention. A PID indicia column 451 is mapped to a set of attributes 453 comprising at least a portion of a PID profile record which includes various data for processing, effectuating, routing, or modifying a particular communication event for a specific PID. The unique PIDs assigned to the subscribers registering at the universal communications database are preferably based on the subscribers' personal indicia, e.g., given name, et cetera. A plurality of PID indicia, for example, PID-1 452-1 through PID-K 452-K are illustratively provided in the database portion 450. Associated with each PID indicium are: subscriber's name 454, address 456, subscriber's primary voice communication address 458 (e.g., wireless or wireline phone number), secondary voice communication address(es) 460, subscriber's pager and fax number(s) 462, one or more email address(s) 464, etc. In addition, each PID profile record preferably contains an access privileges portion 466 and a preference options portion 468 for modifying and qualifying a particular communication event. For example, these portions may comprise time-of-day preferences, device-dependent delivery options, call diversion options, algorithms to resolve multiple secondary phone numbers or email IDs, etc. Accordingly, it should be apparent to those skilled in the art that any portion of the attribute set 453 of a particular profile record may be considered as a "call" treatment data portion used by a network element for obtaining network routing number(s), wireless or wireline phone address(es) for termination and/or origination, email address(es), pager/fax number(s), destination number(s), IP addresses, Uniform Resource Locators (URLs), *mailto* address(es), and various related privileges and options.

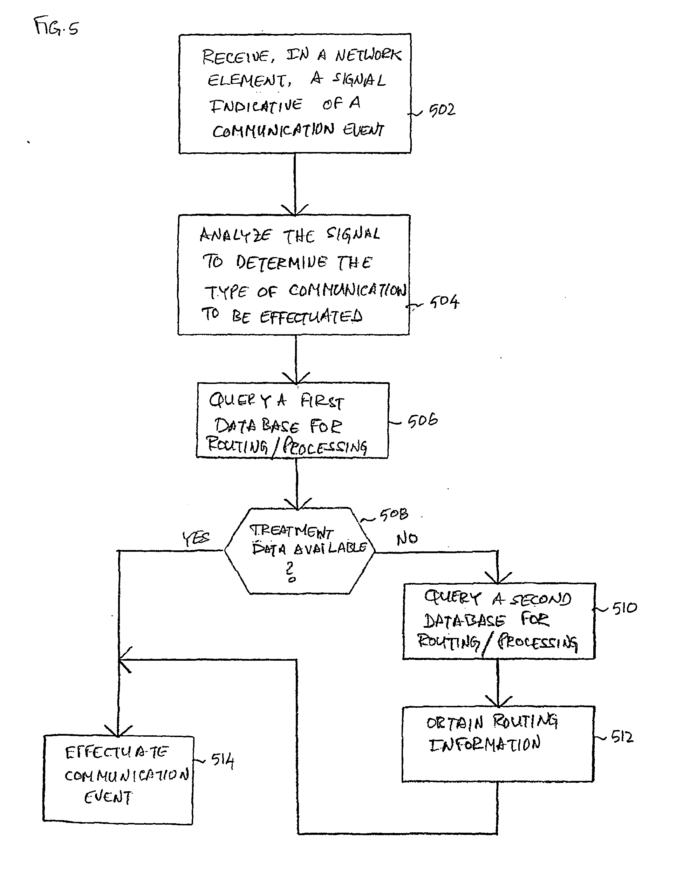

Referring now to FIG. 5, depicted therein is a flow chart comprising the steps involved in an exemplary method of effectuating a communication event in accordance with the teachings of the present invention. Upon receiving in a network element a signal or message indicative of a communication event with respect to a particular subscriber (step 502), which signal/message comprises at least the PID indicium for the subscriber and a communication type identifier, the signal/message is analyzed to determine the type of the communication to be effectuating by examining the communication type identifier (step 504). A first database is queried by the network element (e.g., a local database associated with the network element) to determine the treatment data for the communication event identified by the communication type identifier (step 506). Thereafter, a determination is made as to whether the first database includes sufficient or no information with respect to the PID data value received at the network element in order to effectuate the communication event (decision block 508). If the first database provides sufficient treatment data, the communication event is effectuated accordingly for the subscriber (step 514). Otherwise, the network element queries a second database (e.g., a regional database or a national database) (step 510) to obtain the necessary treatment data (e.g., routing information, terminating number information, etc.) to complete the communication event (steps 512 and 514).

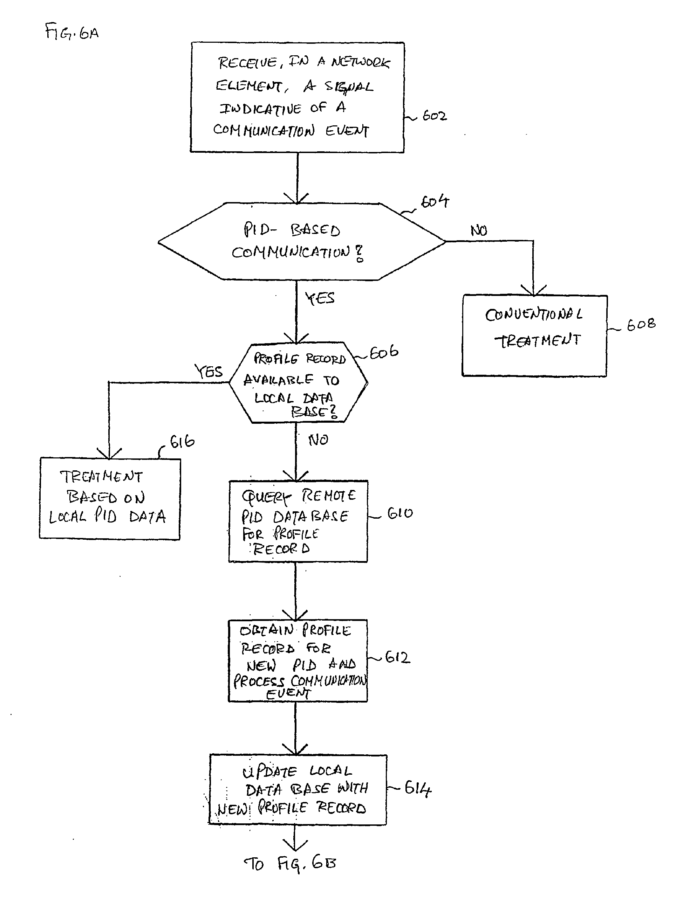

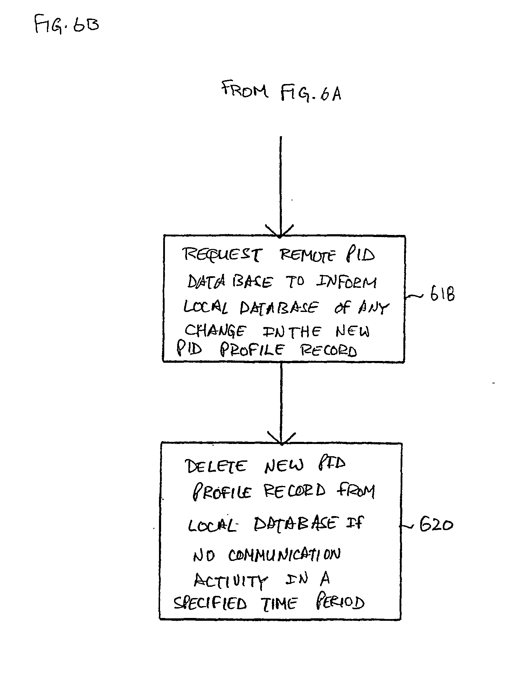

FIGS. 6A and 6B depict a flow chart which includes the various steps involved in an exemplary database record management method for use in a hierarchically organized universal communications database of the present invention. Upon receiving in a network element a message signal indicative of a communication event for a subscriber (step 602), a determination is made if the communication transaction to be effectuated is based on a PID value (decision block 604). If the communication transaction is not based on PID indicia, conventional call treatment is provided by the network element (step 608), which may include interaction with legacy service nodes (e.g., Service Control Points (SCPs) operable in architectures such as the Intelligent Network (IN), Advanced Intelligent Network (AIN), or Wireless Intelligent Network (WIN)).

If the communication to be effectuated is triggered on a PID value, then a further decision is made to determine whether a profile record associated therewith is available in a local database (decision block 606). If the local database contains the PID's profile record, treatment data therefor is obtained for effectuating the communication event. Otherwise, a remote database is queried by the network element to obtain a profile record for the received PID value and process the communication event (steps 610 and 612). Thereafter, the local database is updated with the new profile record retrieved from the remote database (step 614).

In accordance with the teachings of the present invention, the remote database is also requested to inform the local database of any changes that may take place in the profile record retrieved therefrom (step 618). Accordingly, such changes are also reflected in the local database's new PID profile record as they are effected in the remote database. To manage storage/maintenance requirements, the local database is preferably provided with the capability to delete the new PID record if there is no communication activity relating to that PID within a configurable time period (step 620).

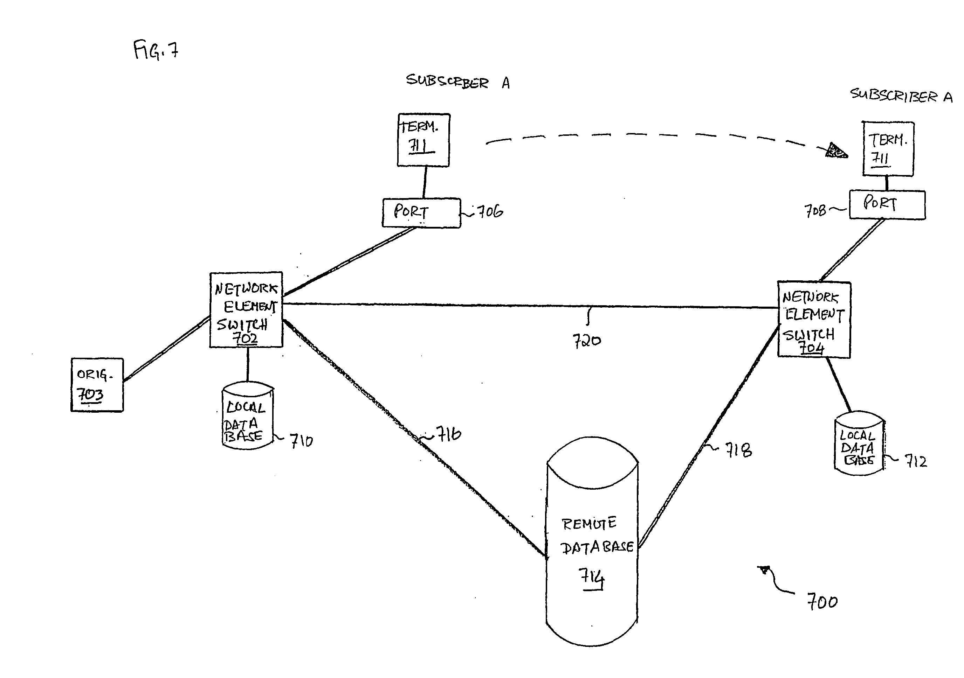

Referring now to FIG. 7, depicted therein is an exemplary communications network system 700 that provides universal mobility for subscribers in accordance with the teachings of the present invention. Subscriber A is a registered subscriber of a remote database 714 (e.g., a national database) wherein the profile record for the unique PID assigned to Subscriber A contains the current port ID and routing information associated with a wireline telephony service that Subscriber A currently receives. The physical port 706 used by Subscriber A to receive the service is served by a first network element, i.e., switch, 702, which may be an end office disposed in a local exchange carrier (LEC) network. A local database 710 operable in accordance with the teachings of the present invention is co-located with the first network element 702.

In the exemplary scenario depicted in FIG. 7, an originating party 703 may initiate a call (i.e., a wireline communication event) to Subscriber A (i.e., terminating party 711) using the unique PID assigned to Subscriber A and an appropriate communication type identifier. The network element 702 resolves the PID indicium and communication type by querying the local database 710. Because the ID/routing information associated with the current port 706 is available to the network element, the call is terminated to the telephony station used by Subscriber A. When Subscriber A moves to a different geographic area (e.g., across a Local Access and Transport Area or LATA) or switches to a different telephony service provider where a separate port 708 is provided, Subscriber A de-registers from the previous port 706 and registers again from the new current port 708 at the remote database 714, which new current port is served by a second network element/switch 704. The POTS dial tone is preferably provided to all ports even before Subscriber A becomes a subscriber to a telephony service, wherein the dial tone is initially operable for database registration only. Accordingly, the PID profile record in the remote database 714 is updated with the port ID for the port 708 and its routing information. A local database 712 associated with the second network element 704 may also be correspondingly updated. When the originating party 703 initiates a call to Subscriber A using the PID and communication type identifier, the first network element 702 determines that Subscriber A has de-registered from the port 706 and, accordingly, queries the remote database 714 for the current routing information. Thereafter, the call is "ported" to the second network element 704 which completes the call. It should be appreciated that because different LATAs and carriers may be involved, path 720 depicted in FIG. 7 may involve one or more networks for appropriate routing. Similarly, paths 716 and 718 used by the network elements to query the remote database may also involve several types of networks, e.g., the Internet, for Web-based access.

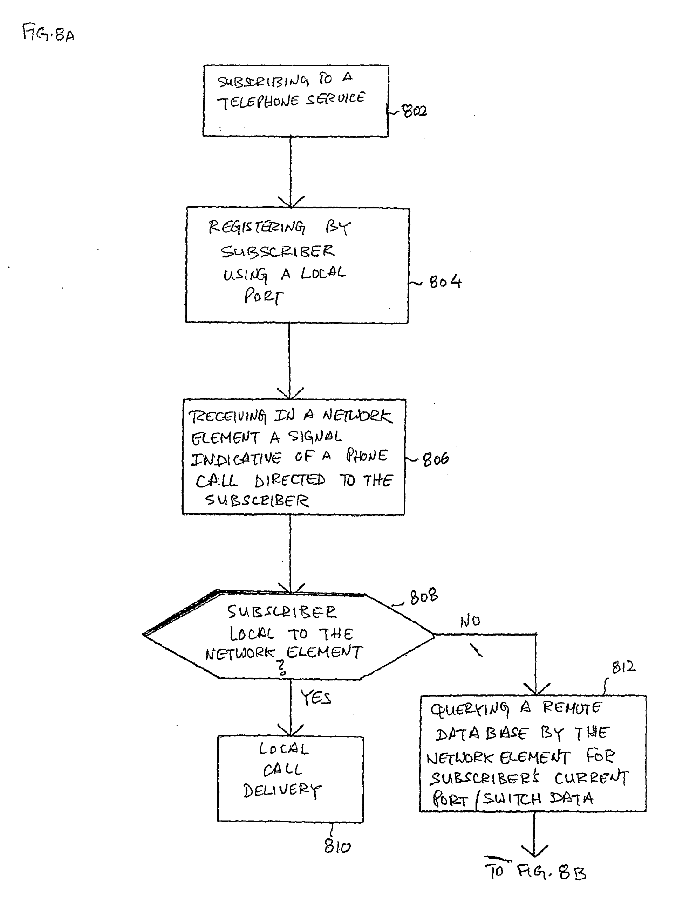

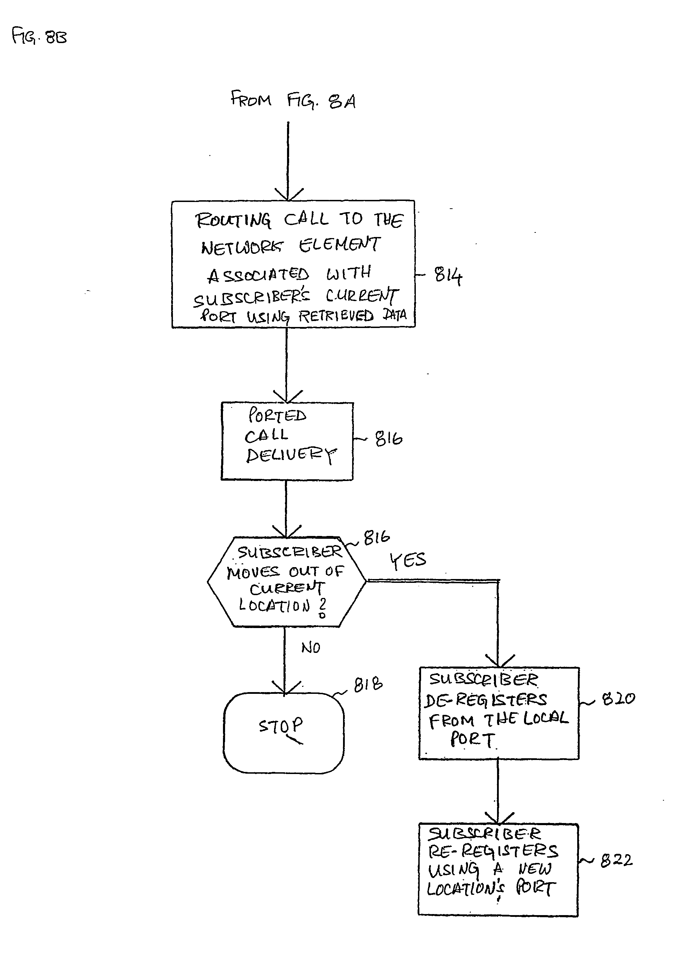

FIGS. 8A and 8B depict a flow chart which illustrates the steps involved in an exemplary call porting method for accomplishing universal mobility in a communications network system such as the network system 700 described hereinabove. Upon subscribing to a telephony service (step 802), a subscriber's PID profile record may be updated by the telephony service provider or by the subscriber to associate new telephone information with the subscriber's PID indicium. Accordingly, when the subscriber registers at the universal communications database using a physical port served by a network element, the port ID and routing information associated therewith are mapped into the PID's profile record (step 804). Thereafter, when a message signal indicative of a phone call directed to the subscriber is received in the network element (step 806), the local database is queried to determine the current local port ID associated with the subscriber's PID (decision block 808). If the current local port ID is available for the subscriber, the call is then delivered (step 810) in accordance with the preferences, if any (step 810). On the other hand, if the subscriber is no longer at the local port, a remote database is queried (step 812) as explained hereinabove. Accordingly, the new port ID and serving switch information is retrieved from the remote database for call routing (step 814). The call is then ported to the new serving switch for call delivery (step 816).

If the subscriber moves out of the new location (decision block 816), the subscriber de-registers from the current port (step 820) and re-registers at the remote database using the next new port available at the next new location (step 822).

Based on the foregoing, those skilled in the art should appreciate that the present invention's universal communications database system and method provides an innovative solution wherein the various deficiencies and shortcomings set forth in the Background section of the present patent application are advantageously overcome. The mapping of a single unique PID to multiple communication events and treatment data associated therewith obviates the need to carry a plethora of contact numbers and addresses for various subscribers. As should be appreciated by those skilled in the art, a number of new services can be offered by utilizing the capability of the universal communications database of the present invention. For example, in addition to PID-based dialing, the following services are illustrative:
- email ID-based dialing;
- screen-name (assigned by ISPs)-based dialing;
- diverting calls to a secondary telephone number when the primary telephone number is busy or not answering the call;
- call screening based on PIDs;
- call screening based on video clips associated with PIDs;
- calling party information display based on personal information stored; and
- name-based dialing.

Because the PID database of the present invention eliminates the need to remember telephone numbers, which may change frequently, an alternative solution to Local Number Portability is advantageously realized by the practice of the teachings of the present invention. A subscriber is no longer tied to a particular port or to a specific central office switch. There is no "porting" of the telephone number; rather, the subscription is allowed to move with the subscriber who can roam anywhere the service provider has service agreements via the universal communications database.

Further, it should be recognized that any database that allows decoupling of telephone subscriptions from the physical ports of a network as described hereinabove (e.g., by providing a mapping between port IDs and subscribers) may be used in lieu of a national PID database for accomplishing universal mobility in accordance herewith. That is, registration as set forth in the foregoing description does not have to be necessarily dependent on the national PID database. Rather, a telephone company (telco) can allow its subscribers roam and register from different ports by using its own database. Subscribers may be allowed to register from visited locations (served by different telcos, for example) by making arrangements with other operating companies.

Also, registration from a physical port may be customized such that it can be for (i) origination only, (ii) termination only, or (iii) both. Moreover, multiple subscribers may register at a port whereby primary, secondary, et cetera, users may be specified. Accordingly, call treatment can be different for the users depending upon their designation. For instance, in order to invoke one's originating privileges, a user registered as a secondary subscriber will have to identify himself first as the secondary user before proceeding further. The registration for the secondary subscriber can be for the duration of a single call or a sequence of calls; or it can be valid until canceled. That is, different procedures have to be invoked for each case. In the case of a user registered as a primary user, the registration is provided on a "permanent" basis, i.e., until canceled.

Additionally, telcos can eliminate the need to disconnect a user's subscription from one location and start a new subscription from a new location by practicing the teachings of the present invention. As there are virtually millions of such operations taking place on an yearly basis, these costs can be avoided accordingly. From a subscriber's point of view, one can move into a new location and start the telephone service without the connection or service setup delay. Also, a subscriber does not have to change the network address and associated service options when the subscriber moves from one geographic location to another. Furthermore, in the practice of the present invention it is no longer necessary to play announcements such as "the subscriber's new number is ..." or "the number you have dialed is disconnected," and the like. It is believed that the operation and construction of the present invention will be apparent from the foregoing Detailed Description. While the system and method shown and described have been characterized as being preferred, it should be readily understood that various changes, modifications and enhancements could be made therein without departing from the scope of the present invention as set forth in the following claims. For example, because of the integration of voice networks and IP-based data networks, the teachings of the present invention may be also be practiced advantageously in hybrid networks wherein a plethora of diverse personal communication devices may be employed for purposes of the present invention. For instance, such devices may comprise H.323-compatible terminals, Session Initiation Protocol (SIP)-based phones, and the like, in addition to pagers, Internet appliances, screen phones, facsimile machines, computers (personal computers, laptops, notebooks, palmtops, handheld devices, etc.), and the ubiquitous wireline and wireless phones. Further, it should be appreciated by those skilled in the art the universal communications database may be implemented using any known or hitherto unknown programming language(s), and may be architected using multiple hierarchical levels which may be interfaced with different types of networks. Additionally, it should be apparent that the database portions and profile records exemplified hereinabove are illustrative only; such database portions may be combined in any form or portion. Accordingly, those skilled in the art should readily appreciate that these and other variations, additions, modifications, enhancements, et cetera, are deemed to be within the ambit of the present invention whose scope is determined solely by the following claims.

## Claims

1. A memory structure for storing a universal communications database (200) usable in effectuating an integrated communications infrastructure, comprising:
a profile array (300) including a plurality of Personal ID (PID) values (302), each of which is uniquely associated with a particular subscriber registering at said universal communications database (200);
at least one communication type identifier (304-1 through 304-N) associated with each PID value (302), said communication type identifier (304-1 through 304-N) operating to signify to a network element (102) a particular communication event engaged with respect to a specific subscriber's PID value, wherein said communication type identifier forming one of a prefix and a suffix for said specific subscriber's PID value;
and a structure (400) corresponding to each PID value for storing a plurality of treatment data (408-1 through 408-K) relating to said PID value based on its communication type identifiers,
wherein when a signal indicative of a communication event is received in said network element (102), said signal including a specific PID value and associated communication type identifier, said signal is translated to provide appropriate treatment data for effectuating said communication event.

2. The memory structure for storing a universal communications database (200) as set forth in claim 1, wherein each PID value (302) comprises an alphabetical indicium based on said subscriber's personal name.

3. The memory structure for storing a universal communications database (200) as set forth in claim 2 or claim 1, wherein said treatment data (408-1 through 408-K) comprises at least one of the following based on one of said PID value's communication type identifiers:
routing number information, wireline phone number information, wireless phone number information, pager number information, email address information, current telephony port ID information and facsimile transmission number information.

4. The memory structure for storing a universal communications database (200) as set forth in claim 3 or claim 2 or claim 1, wherein said communication event comprises one of the following: a wireline telephone call, a pager communication session, a wireless telephone call, an email communication session, an Internet Protocol (IP)-based communication session and a multimedia communication session.

5. The memory structure for storing a universal communications database (200) as set forth in claim 4, claim 3, claim 2 or claim 1, further comprising a database portion (450) for specifying access privileges 466) for each of said PID values, said access privileges (466) interacting with said treatment data 408-1 through 408-K) in effectuating said communication event.

6. The memory structure for storing a universal communications database (200) as set forth in claim 4, claim 3, claim 2 or claim 1, further comprising a database portion (450) for specifying preference options (468) for each of said PID values, said preference options (468) interacting with said treatment data (408-1 through 408-K) in effectuating said communication event.

7. A method of effectuating communication based on a Personal ID (PID) (302) uniquely associated with a subscriber, comprising the steps:
receiving, in a network element (102), a signal indicative of a communication event with respect to said subscriber, said signal including said PID (302) and at least one communication type identifier (304-1 through 304-N);
analyzing, in said network element (120), said signal to identify said communication event by examining said at least one communication type identifier (304-1 through 304-N);
querying a first database (106) to determine appropriate treatment data for said communication event based on said PID*'*s profile record (300,400,450); effectuating said communication event based on said treatment data if available at said first database (106);
otherwise, querying a second database (108) to obtain treatment data for said communication event based on said PID's profile record (300,400,450); and
effectuating said communication event based on said treatment data retrieved from said second database (108).

8. The method of effectuating communication based on a PID (302) uniquely associated with a subscriber as set forth in claim 7, wherein said communication event comprises one of the following: a wireline telephone call, a pager communication session, a wireless telephone call, an email communication session, an Internet Protocol (IP)-based communication session and a multimedia communication session.

9. The method of effectuating communication based on a PID (302) uniquely associated with a subscriber as set forth in claim 8 or claim 7, wherein said PID (302) comprises an alphabetical indicium based on said subscriber's name and said communication type identifier forms one of a prefix, a suffix, an extension or an appendix to said alphabetical indicium.

10. The method of effectuating communication based on a PID (302) uniquely associated with a subscriber as set forth in claim 9, claim 8 or claim 7, further comprising the operation of obtaining a preference option profile (468) for said PID (302) from one of said first database (106) or said second database (108) and modulating said treatment data obtained therefrom in effectuating said communication event.

11. The method of effectuating communication based on a PID (302) uniquely associated with a subscriber as set forth in claim 10, claim 9, claim 8 or claim 7, wherein said first database (106) is a local database co-located with said network element (102).

12. The method of effectuating communication based on a PID (302) uniquely associated with a subscriber as set forth in claim 11, claim 10, claim 9, claim 8 or claim 7, wherein said second database (108) is a regional database or a national database queryable by said network element (102).

13. A communications network (100) for supporting multiple types of communication based on Personal ID (PID) indicia uniquely assigned to subscribers, comprising:
a network element (102) for receiving a signal indicative of a communication event with respect to a specific subscriber, said signal including a unique PID indicium (302) assigned to said specific subscriber and
at least one communication type identifier (304-1 through 304-N) for identifying said communication event's type;
means in said network element (102) for analyzing said signal to determine said communication event's type based on said at least one communication type identifier (304-1 through 304-N);
a database structure (106) associated with said network element (102), said database structure (106) including PID data (300) and a plurality of profile database portions (400,450) associated therewith, each profile record containing treatment data (408-1 through 408-K), access privileges data (466) and preference options data (468) for a particular subscriber, wherein said treatment data (408-1 through 408-K), said access privileges data (466) and said preference options data (468) are operable to be provided for each type of communication supported for said particular subscriber; means in said network element (102) for querying said database structure (106) if said communication event can be processed based on said unique PID indicium (302) assigned to said specific subscriber and said communication type identifier (304-1 through 304-N);
if so, processing said communication event based on at least one of said treatment data (408-1 through 408-K), said access privileges data (466) and said preference options data (468) for said specific subscriber; otherwise, querying a remote database structure (108) for said treatment data (408-1 through 408-K), said access privileges data (466) and said preference options data (468) with respect to said communication event for said specific subscriber; and
effectuating said communication event for said specific subscriber using at least one of said treatment data (408-1 through 408-K), said access privileges data (466) and said preference options data (468) retrieved from said remote database structure (108).

14. A call porting method for providing universal mobility to subscribers in a communications network (100) having a database (106,108) for storing Personal ID (PID) data (300) uniquely assigned to subscribers and a plurality of profile database portions (400,450) associated therewith, each profile record containing an association between said PID data and a current telephony port address for a particular subscriber, said call porting method comprising:
subscribing, by a user, to a telephony service provided by a first service provider;
registering at said database (106,108) by said user using a first telephony port with a first telephony port address that is served by a first network element (102) operated by said first service provider, whereby said first telephony port address is associated with said user's unique PID (302);
receiving, in said first network element (102), a signal indicative of a phone call with respect to said user, said signal including said user's unique PID (302);
determining, in said first network element (302), if said phone call can be effectuated by ascertaining whether said user's PID (302) is currently associated with said first telephony port address;
if so, effectuating said phone call using said first telephony port address;
otherwise, querying said database (106,108) by said first network element (102) to determine if said user has registered said user's PID (302) from a second telephony port address;
if so, obtaining said second telephony port address for said user; and effectuating said phone call for said user using said second telephony port address.

15. The call porting method for providing universal mobility to subscribers in a communications network (100) as set forth in claim 14, wherein said user's unique PID (302) comprises an alphabetical portion based on said user's name, and further wherein said first and second telephony port addresses are located in different geographical areas.

16. The call porting method for providing universal mobility to subscribers in a communications network (100) as set forth in claim 15 or claim 14, wherein said first and second telephony port addresses are serviced by different service providers.

## Patentansprüche

1. Speicherstruktur zum Speichern einer universellen Kommunikationsdatenbank (200), die zum Aktivieren einer integrierten Kommunikationsinfrastruktur genutzt werden kann und die Folgendes umfasst:
eine Profilanordnung (300) einschließlich einer Vielzahl von PID-Werten (302), von denen jeder einer bestimmten Teilnehmerregistrierung in dieser universellen Kommunikationsdatenbank (200) eindeutig zugeordnet ist;
mindestens eine jedem PID-Wert (302) zugeordnete Kennung der Kommunikationsart (304-1 bis 304-N), wobei diese Kennung der Kommunikationsart (304-1 bis 304-N) so arbeitet, dass sie einem Netzwerkelement (102) ein bestimmtes Kommunikationsereignis hinsichtlich des PID-Werts eines bestimmten Teilnehmers signalisiert, wobei diese Kennung der Kommunikationsart ein Präfix und ein Suffix für diesen PID-Wert des spezifischen Teilnehmers bildet; und eine Struktur (400) zu jedem PID-Wert zum Speichern einer Vielzahl von Verarbeitungsdaten (408-1 bis 408-K) mit Bezug auf diesen PID-Wert auf der Basis seiner Kennungen der Kommunikationsart,
wobei, wenn ein Signal mit dem Hinweis auf ein Kommunikationsereignis in diesem Netzwerkelement (102) empfangen wird, dieses Signal mit einem bestimmten PID-Wert und einer zugeordnete Kennung der Kommunikationsart umgesetzt wird, so dass es entsprechende Verarbeitungsdaten bereitstellt zum Aktivieren dieses Kommunikationsereignisses.

2. Speicherstruktur zum Speichern einer universellen Kommunikationsdatenbank (200) gemäß Anspruch 1, wobei jeder PID-Wert (302) ein alphabetisches Kenndatum auf der Basis des persönlichen Namens des Teilnehmers aufweist.

3. Speicherstruktur zum Speichern einer universellen Kommunikationsdatenbank (200) gemäß Anspruch 2 oder Anspruch 1, wobei diese Verarbeitungsdaten (408-1 bis 408-K) auf der Basis einer der Kennungen der Kommunikationsart des PID-Werts mindestens eine der folgenden Komponenten umfasst:
Informationen zur Weiterleitungsnummer, Informationen zur Festnetz-Telefonnummer, Informationen zur Mobil-Telefonnummer, Informationen zur Pager-Nummer, Informationen zur E-Mail-Adresse, Informationen zur aktuellen Telefonie-Port-ID und Informationen zur Faxübertragungsnummer.

4. Speicherstruktur zum Speichern einer universellen Kommunikationsdatenbank (200) gemäß Anspruch 3 oder Anspruch 2 oder Anspruch 1, wobei dieses Kommunikationsereignis eine der folgenden Komponenten umfasst: einen Festnetz-Telefonanruf, eine Pager-Kommunikations-Session, einen Mobil-Telefonanruf, eine E-Mail-Kommunikations-Session, eine IP-Kommunikations-Session (Internet Protocol) und eine Multimedia-Kommunikations-Session.

5. Speicherstruktur zum Speichern einer universellen Kommunikationsdatenbank (200) gemäß Anspruch 4, Anspruch 3, Anspruch 2 oder Anspruch 1, die des Weiteren einen Datenbankbereich (450) zum Angeben von Zugriffsberechtigungen (466) für jeden dieser PID-Werte umfasst, wobei diese Zugriffsberechtigungen (466) mit diesen Verarbeitungsdaten (408-1 bis 408-K) beim Aktivieren dieses Kommunikationsereignisses interagieren.

6. Speicherstruktur zum Speichern einer universellen Kommunikationsdatenbank (200) gemäß Anspruch 4, Anspruch 3, Anspruch 2 oder Anspruch 1, die des Weiteren einen Datenbankbereich (450) zum Angeben von Präferenzoptionen (468) für jeden dieser PID-Werte umfasst, wobei diese Präferenzoptionen (468) mit diesen Verarbeitungsdaten (408-1 bis 408-K) beim Aktivieren dieses Kommunikationsereignisses interagieren.

7. Verfahren zum Aktivieren einer Kommunikation auf der Basis einer einem Teilnehmer eindeutig zugeordneten persönlichen Personal ID (PID) (302), wobei dieses Verfahren die folgenden Schritte umfasst:
Empfangen eines Signalhinweises zu einem Kommunikationsereignis zu diesem Teilnehmer in einem Netzwerkelement (102), wobei dieses Signal diese PID (302) umfasst und mindestens eine Kennung der Kommunikationsart (304-1 bis 304-N);
Analysieren dieses Signals in diesem Netzwerkelement (120) zum Identifizieren dieses Kommmunikationsereignisses durch Untersuchen mindestens einer Kennung der Kommunikationsart (304-1 bis 304-N);
Abfragen einer ersten Datenbank (106) zum Ermitteln geeigneter Verarbeitungsdaten für dieses Kommunikationsereignis auf der Basis dieses PID-Profildatensatzes (300,400,450); Aktivieren dieses Kommunikationsereignisses auf der Basis dieser Verarbeitungsdaten, sofern diese in dieser ersten Datenbank (106) verfügbar sind;
andernfalls Abfragen einer zweiten Datenbank (108) zum Abrufen von Verarbeitungsdaten für dieses Kommunikationsereignis auf der Basis dieses PID-Profildatensatzes (300,400,450); und Aktivieren dieses Kommunikationsereignisses auf der Basis dieser aus der zweiten Datenbank (108) abgerufenen Verarbeitungsdaten.

8. Verfahren zum Aktivieren der Kommunikation auf der Basis einer PID (302) gemäß Anspruch 7, die einem Teilnehmer eindeutig zugewiesen ist, wobei dieses Kommunikationsereignis eine der folgenden Komponenten umfasst: einen Festnetz-Telefonanruf, eine Pager-Kommunikations-Session, einen Mobil-Telefonanruf, eine E-Mail-Kommunikations-Session, eine IP-Kommunikations-Session (Internet Protoco1) und eine Multimedia-Kommunikations-Session.

9. Verfahren zum Aktivieren der Kommunikation auf der Basis einer PID (302) gemäß Anspruch 8 oder Anspruch 7, die einem Teilnehmer eindeutig zugewiesen ist, wobei diese PID (302) ein alphabetisches Kenndatum auf der Basis des Namens des Teilnehmers umfasst und wobei diese Kennung der Kommunikationsart ein Präfix, ein Suffix, eine Erweiterung oder einen Anhang zu diesem alphabetischen Kenndatum bildet.

10. Verfahren zum Aktivieren der Kommunikation auf der Basis einer PID (302) gemäß Anspruch 9, Anspruch 8 oder Anspruch 7, die einem Teilnehmer eindeutig zugewiesen ist, wobei dieses Verfahren des Weiteren den Vorgang zum Abrufen eines Präferenzoptionsprofils (468) für diese PID (302) aus dieser ersten Datenbank (106) oder dieser zweiten Datenbank (108) sowie das Modulieren dieser daraus abgerufenen Verarbeitungsdaten bei der Aktivierung dieses Kommunikationsereignisses umfasst.

11. Verfahren zum Aktivieren der Kommunikation auf der Basis einer PID (302) gemäß Anspruch 10, Anspruch 9, Anspruch 8 oder Anspruch 7, die einem Teilnehmer eindeutig zugewiesen ist, wobei diese erste Datenbank (106) eine lokale Datenbank ist, die neben diesem Netzwerkelement (102) angeordnet ist.

12. Verfahren zum Aktivieren der Kommunikation auf der Basis einer PID (302) gemäß Anspruch 11, Anspruch 10, Anspruch 9, Anspruch 8 oder Anspruch 7, die einem Teilnehmer eindeutig zugewiesen ist, wobei diese zweite Datenbank (108) eine regionale oder nationale Datenbank ist, die von diesem Netzwerkelement (102) abgefragt werden kann.

13. Kommunikationsnetzwerk (100) zur Unterstützung mehrerer Arten der Kommunikation auf der Basis persönlicher ID-Kenndaten (PID), die Teilnehmern eindeutig zugeordnet sind, wobei das Kommunikationsnetzwerk Folgendes umfasst:
ein Netzwerkelement (102) zum Empfangen eines Signal, das auf ein Kommunikationsereignis zu einem spezifischen Teilnehmer hinweist, wobei dieses Signal eindeutige, diesem spezifischen Teilnehmer zugeordnete PID-Kenndaten (302) umfasst und mindestens eine Kennung der Kommunikationsart (304-1 bis 304-N) zur Identifikation des Typs des Kommunikationsereignisses;
Mittel in diesem Netzwerkelement (102) zum Analysieren dieses Signals, um die Art dieses Kommmunikationsereignisses zu ermitteln auf der Basis mindestens einer Kennung der Kommunikationsart (304-1 bis 304-N);
eine diesem Netzwerkelement (102) zugeordnete Datenbankstruktur (106), wobei diese Datenbankstruktur (106) PID-Daten (300) umfasst und eine Vielzahl ihnen zugeordneter Profildatenbankbereiche (400, 450), wobei jeder Profildatensatz Verarbeitungsdaten (408-1 bis 408-K), Zugangsberechtigungsdaten (466) und Präferenzoptionsdaten (468) für einen bestimmten Teilnehmer umfasst, wobei diese Verarbeitungsdaten (408-1 bis 108-K), diese Zugangsberechtigungsdaten (466) und diese Präferenzoptionsdaten (468) für jede Art von Kommunikation betrieben werden können, die für diesen spezifischen Teilnehmer unterstützt wird; Mittel in diesem Netzwerkelement (102) zum Abfragen dieser Datenbankstruktur (106), wenn dieses Kommunikationsereignis auf der Basis dieser diesem spezifischen Teilnehmer und dieser Kennung der Kommunikationsart (304-1 bis 304-N) zugeordneten eindeutigen PID-Kenndaten (302) verarbeitet werden kann; ist dies der Fall, Verarbeitung dieses Kommunikationsereignisses dieser Zugriffsberechtigungsdaten (466) und
dieser Präferenzoptionsdaten (468) für diesen spezifischen Teilnehmer auf der Basis von mindestens einem Satz dieser Verarbeitungsdaten (408-1 bis 408-K); andernfalls Abfragen einer fernen Datenbankstruktur (108) auf diese Verarbeitungsdaten (408-1 bis 408-K), diese Zugangsberechtigungsdaten (466) und diese Präferenzoptionsdaten (468) zu diesem Kommunikationsereignis für diese spezifischen Teilnehmer; und
Aktivieren dieses Kommunikationsereignisses für diesen spezifischen Teilnehmer mit mindestens einem dieser Verarbeitungsdaten-Sets (408-1 bis 408-K), wobei diese Zugangsberechtigungsdaten (466) und diese Präferenzoptionsdaten (468) aus dieser fernen Datenbankstruktur (108) abgerufen wurden.

14. Anruf-Portierungsverfahren zur Bereitstellung einer universellen Mobilität für die Teilnehmer in einem Kommunikationsnetzwerk (100) mit einer Datenbank (106,108) zum Speichern persönlicher den Teilnehmern eindeutig zugeordneter ID-Daten (PID) (300) und einer Vielzahl ihnen zugeordneter Profildatenbankbereiche (400,950), wobei jeder Profildatensatz eine zuordnung zwischen diesen PID-Daten und einer aktuellen Telefonie-Port-Adresse für einen spezifischen Teilnehmer umfasst, wobei dieses Anruf-Portierungsverfahren Folgendes umfasst:
Anmelden eines von einem ersten Dienstanbieter bereitgestellten Telefoniedienstes durch einen Benutzer;
Registrieren bei dieser Datenbank (106,108) durch diesen Benutzer mit einem ersten Telefonie-Port mit einer ersten Telefonie-Port-Adresse, die von einem ersten Netzwerkelement (102) bedient wird, das von diesem ersten Dienstanbieter betrieben wird, wobei diese erste Telefonie-Port-Adresse der eindeutigen PID (302) dieses Benutzers zugeordnet ist;
Empfangen eines Signals mit einem Hinweis auf einen Telefonanruf zu diesem Benutzer in einem ersten Netzwerkelement (102), wobei dieses Signal die eindeutige PID (302) dieses Benutzers enthält;
Ermitteln in diesem ersten Netzwerkelement (302), ob dieser Telefonanruf aktiviert werden kann durch Überprüfen, ob die PID (302) dieses Benutzers derzeit dieser ersten Telefonie-Port-Adresse zugeordnet ist;
ist dies der Fall, Aktivieren dieses Telefonanrufs mit der ersten Telefonie-Port-Adresse;
andernfalls Abfragen dieser Datenbank (106,108) durch dieses erste Netzwerkelement (102), um festzustellen, ob dieser Benutzer die PID (302) dieses Benutzers von einer zweiten Telefonie-Port-Adresse aus registriert hat;
ist dies der Fall, Abrufen dieser zweiten Telefonie-Port-Adresse für diesen Benutzer; und Aktivieren dieses Telefonanrufs für diesen Benutzer mit dieser zweiten Telefonie-Port-Adresse.

15. Anruf-Portierungsverfahren zur Bereitstellung einer universellen Mobilität für die Teilnehmer in einem Kommunikationsnetzwerk (100) gemäß Anspruch 14, wobei die eindeutige PID (302) dieses Benutzers einen alphabetischen Bereich umfasst auf der Basis des Namens des Benutzers und wobei sich des Weiteren die erste und zweite Telefonie-Port-Adresse in unterschiedlichen geografischen Bereichen befinden.

16. Anruf-Portierungsverfahren zur Bereitstellung einer universellen Mobilität für die Teilnehmer in einem Kommunikationsnetzwerk (100) gemäß Anspruch 15 oder Anspruch 14, wobei diese erste und zweite Telefonie-Port-Adresse von verschiedenen Dienstanbietern bedient werden.

## Revendications

1. Structure de mémoire destinée à stocker une base de données de communication universelle (200) pouvant être utilisée pour réaliser une infrastructure de communication intégrée, comprenant :
un réseau de profils (300) comprenant une pluralité de valeurs d'identification personnelle (PID) (302), dont chacune est associée de manière unique à un abonné particulier enregistré dans ladite base de données de communication universelle (200) ;
au moins un identifiant de type de communication (304-1 à 304-N) associé à chaque valeur PID (302), ledit identifiant de type de communication (304-1 à 304-N) fonctionnant pour signifier à un élément de réseau (102) un événement de communication particulier engagé en relation avec une valeur PID d'abonné spécifique, dans laquelle ledit identifiant de type de communication forme l'un d'un préfixe et d'un suffixe pour ladite valeur PID d'abonné spécifique ; et une structure (400) correspondant à chaque valeur PID destinée à stocker une pluralité de données de traitement (408-1 à 408-K) concernant ladite valeur PID sur la base de ses identifiants de type de communication,
dans laquelle, lorsqu'un signal indicatif d'un événement de communication est reçu dans ledit élément de réseau (102), ledit signal comprenant une valeur PID spécifique et un identifiant de type de communication associé, ledit signal est traduit pour produire des données de traitement appropriées pour réaliser ledit événement de communication.

2. Structure de mémoire destinée à stocker une base de données de communication universelle (200) selon la revendication 1, dans laquelle chaque valeur PID (302) comprend un indice alphabétique basé sur le nom personnel dudit abonné.

3. Structure de mémoire destinée à stocker une base de données de communication universelle (200) selon la revendication 2 ou 1, dans laquelle lesdites données de traitement (408-1 à 408-K) comprennent au moins l'un de ce qui suit sur la base de l'un desdits identifiants de type de communication de valeur PID :
information de numéro d'acheminement, information de numéro de téléphone fixe, information de numéro de téléphone sans fil, information de numéro de téléavertisseur, information d'adresse de courrier électronique, information d'ID de port téléphonique courant et information de numéro de transmission de télécopie.

4. Structure de mémoire destinée à stocker une base de données de communication universelle (200) selon la revendication 3 ou 2 ou 1, dans laquelle ledit événement de communication comprend l'un de ce qui suit : un appel téléphonique fixe, une session de communication de téléavertisseur, un appel téléphonique sans fil, une session de communication par courrier électronique, une session de communication basée sur le protocole Internet (IP) et une session de communication multimédia.

5. Structure de mémoire destinée à stocker une base de données de communication universelle (200) selon la revendication 4, 3, 2 ou 1, comprenant en outre une partie de base de données (450) destinée à spécifier des privilèges d'accès (466) pour chacune desdites valeurs PID, lesdits privilèges d'accès (466) interagissant avec lesdites données de traitement (408-1 à 408-K) pour réaliser ledit événement de communication.

6. Structure de mémoire destinée à stocker une base de données de communication universelle (200) selon la revendication 4, 3, 2 ou 1, comprenant en outre une partie de base de données (450) destinée à spécifier des options de préférence (468) pour chacune desdites valeurs PID, lesdites options de préférence (468) interagissant avec lesdites données de traitement (408-1 à 408-K) pour réaliser ledit événement de communication.

7. Procédé de réalisation d'une communication basée sur une identification personnelle (PID) (302) associée de manière unique à un abonné, comprenant les étapes consistant à :
recevoir, dans un élément de réseau (102), un signal indicatif d'un événement de communication en relation avec ledit abonné, ledit signal comprenant ladite PID (302) et au moins un identifiant de type de communication (304-1 à 304-N) ;
analyser, dans ledit élément de réseau (102), ledit signal pour identifier ledit événement de communication en examinant ledit au moins un identifiant de type de communication (304-1 à 304-N) ;
effectuer une requête sur une première base de données (106) pour déterminer des données de traitement appropriées pour ledit événement de communication sur la base dudit enregistrement de profil de la PID (300, 400, 450) ;
réaliser ledit événement de communication sur la base desdites données de traitement si elles sont disponibles dans ladite première base de données (106) ;
sinon, effectuer une requête sur une seconde base de données (108) pour obtenir les données de traitement pour ledit événement de communication sur la base dudit enregistrement de profil de la PID (300, 400, 450) ; et
réaliser ledit événement de communication sur la base desdites données de traitement récupérées de ladite seconde base de données (108).

8. Procédé de réalisation d'une communication basée sur une PID (302) associée de manière unique à un abonné selon la revendication 7, dans lequel ledit événement de communication comprend l'un de ce qui suit : un appel téléphonique fixe, une session de communication de téléavertisseur, un appel téléphonique sans fil, une session de communication par courrier électronique, une session de communication basée sur le protocole Internet (IP) et une session de communication multimédia.

9. Procédé de réalisation d'une communication basée sur une PID (302) associée de manière unique à un abonné selon la revendication 8 ou 7, dans lequel ladite PID (302) comprend un indice alphabétique basé sur le nom dudit abonné et ledit identifiant de type de communication forme l'un d'un préfixe, d'un suffixe, d'une extension ou d'un appendice audit indice alphabétique.

10. Procédé de réalisation d'une communication basée sur une PID (302) associée de manière unique à un abonné selon la revendication 9, 8 ou 7, comprenant en outre l'opération consistant à obtenir un profil d'option de préférence (468) pour ladite PID (302) depuis l'une de ladite première base de données (106) ou de ladite seconde base de données (108) et à moduler lesdites données de traitement obtenues ainsi lors de la réalisation dudit événement de communication.

11. Procédé de réalisation d'une communication basée sur une PID (302) associée de manière unique à un abonné selon la revendication 10, 9, 8 ou 7, dans lequel ladite première base de données (106) est une base de données locale colocalisée avec ledit élément de réseau (102).

12. Procédé de réalisation d'une communication basée sur une PID (302) associée de manière unique à un abonné selon la revendication 11, 10, 9, 8 ou 7, dans lequel ladite seconde base de données (108) est une base de données régionale ou une base de données nationale sur laquelle ledit élément de réseau (102) peut effectuer une requête.

13. Réseau de communication (100) destiné à supporter de multiples types de communications basées sur des indices d'identification personnelle (PID) assignés de manière unique à des abonnés, comprenant :
un élément de réseau (102) destiné à recevoir un signal indicatif d'un événement de communication en relation avec un abonné spécifique, ledit signal comprenant un indice PID unique (302) assigné audit abonné spécifique et au moins un identifiant de type de communication (304-1 à 304-N) destiné à identifier le type dudit événement de communication ;
des moyens dans ledit élément de réseau (102) destinés à analyser ledit signal pour déterminer le type dudit événement de communication sur la base dudit au moins un identifiant de type de communication (304-1 à 304-N) ;
une structure de base de données (106) associée audit élément de réseau (102), ladite structure de base de données (106) comprenant des données PID (300) et une pluralité de parties de base de données de profil (400, 450) qui leur sont associées, chaque enregistrement de profil contenant des données de traitement (408-1 à 408-K), des données de privilège d'accès (466) et des données d'option de préférence (468) pour un abonné particulier, dans lequel lesdites données de traitement (408-1 à 408-K), lesdites données de privilège accès (466) et lesdites données d'option de préférence (468) peuvent fonctionner pour être fournies pour chaque type de communication supportée pour ledit abonné particulier ;
des moyens dans ledit élément de réseau (102) destinés à effectuer une requête sur ladite structure de base de données (106) pour savoir si ledit événement de communication peut être traité sur la base dudit indice PID unique (302) assigné audit abonné spécifique et dudit identifiant de type de communication (304-1 à 304-N);
si oui, le traitement dudit événement de communication sur la base d'au moins l'une desdites données de traitement (408-1 à 408-K), desdites données de privilège accès (466) et desdites données d'option de préférence (468) pour ledit abonné spécifique ;
sinon, la requête à une structure de base de données à distance (108) desdites données de traitement (408-1 à 408-K), desdites données de privilège accès (466) et desdites données d'option de préférence (468) en relation avec ledit événement de communication pour ledit abonné spécifique ;
la réalisation dudit événement de communication pour ledit abonné spécifique en utilisant au moins l'une desdites données de traitement (408-1 à 408-K), desdites données de privilège accès (466) et desdites données d'option de préférence (468) récupérées de ladite structure de base de données à distance (108).

14. Procédé de portage d'appel destiné à fournir une mobilité universelle à des abonnés dans un réseau de communication (100) comportant une base de données (106, 108) destinée à stocker des données d'identification personnelle (PID) (300) assignées de manière unique aux abonnés et une pluralité de parties de base de données de profil (400, 450) qui leur sont associées, chaque enregistrement de profil contenant une association entre lesdites données PID et une adresse de port téléphonique courante pour un abonné particulier, ledit procédé de portage d'appel comprenant :
l'abonnement par un utilisateur à un service téléphonique fourni par un premier fournisseur de services ;
l'enregistrement dans ladite base de données (106, 108) par ledit utilisateur en utilisant un premier port téléphonique ayant une première adresse de port téléphonique qui est desservie par un premier élément de réseau (102) activé par ledit premier fournisseur de services, grâce à quoi ladite première adresse de port téléphonique est associée à ladite PID unique d'utilisateur (302) ;
la réception, dans ledit premier élément de réseau (102), d'un signal indicatif d'un appel téléphonique en relation avec ledit utilisateur, ledit signal comprenant ladite PID unique d'utilisateur (302) ;
la détermination, dans ledit premier élément de réseau (102), de si ledit appel téléphonique peut être réalisé en vérifiant si ladite PID d'utilisateur (302) est présentement associée à ladite première adresse de port téléphonique ;
si oui, la réalisation dudit appel téléphonique en utilisant ladite première adresse de port téléphonique ;
sinon, la requête à ladite base de données (106, 108) par ledit premier élément de réseau (102) pour déterminer si ledit utilisateur a enregistré ladite PID d'utilisateur (302) depuis une seconde adresse de port téléphonique ;
si oui, l'obtention de ladite seconde adresse de port téléphonique pour ledit utilisateur ; et la réalisation dudit appel téléphonique pour ledit utilisateur en utilisant ladite seconde adresse de port téléphonique.

15. Procédé de portage d'appel destiné à fournir une mobilité universelle à des abonnés dans un réseau de communication (100) selon la revendication 14, dans lequel ladite PID unique d'utilisateur (302) comprend une partie alphabétique basée sur le nom dudit utilisateur, et en outre dans lequel lesdites première et seconde adresses de port téléphonique sont situées dans des zones géographiques différentes.

16. Procédé de portage d'appel destiné à fournir une mobilité universelle à des abonnés dans un réseau de communication (100) selon la revendication 15 ou 14,
dans lequel lesdites première et seconde adresses de port téléphonique sont desservies par des fournisseurs de services différents.
